# FASCICULE DE BREVET EUROPEEN

(11) **EP 4 359 269 B1**
(45) Date de publication et mention de la délivrance du brevet: **23.07.2025**
(21) Numéro de dépôt: 22735418.0
(22) Date de dépôt: 24.06.2022
(51) Int. Cl.: B60S 1/52, B60S 1/38

(54) **BALAI D'ESSUYAGE D'UN SYSTÈME D'ESSUYAGE**
WISCHER EINER WISCHERANLAGE
WIPER OF A WIPER SYSTEM

(30) Priorité: 25.06.2021 FR 2106852
(43) Date de publication de la demande: 01.05.2024
(73) Titulaire: VALEO SYSTEMES D'ESSUYAGE, 78322 Le Mesnil Saint Denis (FR)
(72) Inventeur: JARASSON, Jean-Michel, 78322 LE MESNIL SAINT DENIS (FR); CAILLOT, Gérald, 78322 LE MESNIL SAINT DENIS (FR); IZABEL, Vincent, 78322 LE MESNIL SAINT DENIS (FR)
(74) Mandataire: Valeo Visibility
(86) Numéro de dépôt international: PCT/EP2022/067452
(87) Numéro de publication internationale: WO 2022/269085

(56) Documents cités:
- DE-A1- 19 838 764
- FR-A1- 2 929 907
- FR-A1- 2 961 457
- FR-A1- 3 046 763
- US-A1- 2014 331 434

## Description

La présente invention a trait au domaine des systèmes d'essuyage pour surface vitrée, notamment pour un pare-brise ou une lunette arrière, de véhicule. Plus particulièrement, la présente invention concerne un balai d'essuyage d'un tel système d'essuyage en coopération avec les systèmes de nettoyage.

Généralement, un véhicule comprend une surface vitrée disposée à l'avant du véhicule, un conducteur pouvant ainsi observer l'environnement à l'avant du véhicule. La surface vitrée doit être transparente et optiquement neutre pour que le conducteur puisse observer correctement l'environnement à l'avant du véhicule. Par sa position, que le véhicule soit à l'arrêt ou circule sur une route, la surface vitrée est exposée aux conditions météorologiques, comme la pluie par exemple, mais également à certaines particules ou salissures qui peuvent obstruer au moins en partie la vision qu'à le conducteur de l'environnement à l'avant du véhicule. Pour évacuer ces différents éléments, le véhicule comprend un système d'essuyage apte à essuyer et ainsi évacuer l'eau et les différents éléments présents sur la surface vitrée du véhicule en dehors de la surface vitrée du véhicule.

Il est connu que de tels systèmes d'essuyage comprennent au moins un bras et un balai d'essuyage, le bras étant solidaire du véhicule par l'une de ses extrémités et porteur du balai d'essuyage, par son extrémité opposée. Le bras est plus précisément connecté à un arbre d'un moteur installé sur le véhicule, le bras pouvant être entraîné dans un mouvement de va et vient autour d'une direction d'allongement principal de l'arbre. Le bras entraîne quant à lui le balai d'essuyage contre la surface vitrée du véhicule pour en évacuer l'eau et les éléments obstruant la vision du conducteur.

Il est connu d'équiper ces véhicules d'un système de nettoyage configuré pour projeter un liquide nettoyant contre la surface vitrée du véhicule pour faciliter l'essuyage de particules ou salissures présentes sur la surface vitrée. De tels systèmes de nettoyage peuvent comprendre des buses de projection de liquide nettoyant installées sur le capot du véhicule au plus proche de la surface vitrée à nettoyer, et/ou peuvent comprendre une rampe de projection directement installée sur le bras et/ou sur le balai d'essuyage du système d'essuyage afin de projeter de façon encore plus proche et de façon homogène le liquide nettoyant. Une telle rampe de projection comprend une rangée d'orifices de projection de liquide nettoyant. Il est connu d'installer la rangée d'orifices de projection le long du balai d essuyage, voir par exemple FR-A-3046763. De la sorte, la rangée d'orifices de projection distribue du liquide nettoyant sur l'ensemble d'une zone à essuyer de la surface vitrée sur laquelle passe le balai d'essuyage. Cependant, la forme des orifices de projection ainsi que leur répartition le long du balai d'essuyage ne présentent pas une mouillabilité optimale de la surface vitrée, pouvant entraîner des traînées de liquide nettoyant sur la surface vitrée après le passage du balai d'essuyage, ou encore l'absence de liquide sur une zone particulière de la surface vitrée.

La présente invention s'inscrit dans ce contexte en proposant un système comprenant une rampe de projection permettant d'améliorer la mouillabilité de la surface vitrée par rapport à un système déjà existant équipé de rampe de projection.

La présente invention a pour principal objet un balai d'essuyage d'un système d'essuyage pour un véhicule comprenant au moins une lame d'essuyage portée par un support et configurée pour essuyer une surface vitrée d'un véhicule, le balai d'essuyage comprenant un déflecteur configuré pour être relié à un système de nettoyage distribuant du liquide nettoyant, le déflecteur comprenant un corps dans lequel est ménagé une rampe de projection du liquide nettoyant configurée pour être reliée au système de nettoyage, la rampe de projection s'étendant le long d'une direction d'allongement principal du déflecteur et comprenant au moins une rangée d'orifices de projection, caractérisé en ce qu'au moins un des orifices de projection comprend une section de passage du liquide nettoyant comprise entre 0,002 mm² et 0,070 mm², et en ce que les orifices de projection d'une rangée sont espacés d'un pas compris entre 0,15 et 10mm le long de la direction d'allongement principal du déflecteur.

En d'autres termes, le déflecteur du balai d'essuyage selon l'invention est configuré pour être relié à un système de nettoyage distribuant du liquide nettoyant, le déflecteur comprenant un corps qui d'une part délimite un logement pour un support d'une lame d'essuyage, et d'autre part comprend une aile faisant saillie à l'opposé du logement, le déflecteur comprenant une rampe de projection du liquide nettoyant disposé au travers du corps, la rampe de projection comprenant au moins un tube de distribution s'étendant le long d'une direction d'allongement principal du déflecteur, le tube de distribution étant configuré pour être relié au système de nettoyage, la rampe de projection comprenant une pluralité de canaux repartie le long de la direction d'allongement principal du déflecteur, la rampe de projection comprenant une pluralité d'orifices de projection, chacun des canaux s'étendant entre le tube de distribution et un orifice de projection de la pluralité d'orifices de projection, dans lequel au moins un des canaux comprend une section de passage du liquide nettoyant comprise entre 0,002 mm² et 0,070 mm², et dans lequel les orifices de projection d'une rangée sont espacés d'un pas compris entre 0,15 et 10mm le long de la direction d'allongement principal du déflecteur.

On comprend de ce qui précède que le balai d'essuyage comprend d'une part le déflecteur et d'autre part la lame d'essuyage destinée à être en contact avec la surface vitrée du véhicule. La lame d'essuyage comprend un support destiné à coopérer avec le logement délimité par le corps du déflecteur de sorte à rendre la lame d'essuyage solidaire du déflecteur.

La rampe de projection comprend le tube de distribution et la pluralité de canaux s'étendant radialement depuis le tube de distribution vers l'extérieur du déflecteur. Chaque canal s'étend entre le tube de distribution et un orifice de projection tel que le liquide nettoyant circulant dans le tube de distribution circule également à travers chaque canal vers l'orifice de projection dédié.

Selon une caractéristique optionnelle de l'invention, la section de passage du canal comprise entre 0,002 mm² et 0,070 mm² est proche de l'orifice de projection.

Une section de passage comprise entre 0,002 mm² et 0,070 mm² favorise la brumisation du liquide nettoyant, cette brumisation augmentant la mouillabilité du liquide nettoyant sur la surface vitrée du véhicule.

Par ailleurs, le pas entre deux orifices de projection d'une même rangée, compris entre 0,15 et 10mm, optimise la répartition du liquide nettoyant brumisé contre la surface vitrée du véhicule. En effet, les orifices de projection sont ainsi disposés tout le long du déflecteur, en assurant une répartition régulière du liquide nettoyant brumisé tout le long du déflecteur.

Un tel pas entre les orifices de projection permet en outre d'obtenir le meilleur compromis entre la qualité de nettoyage (i.e. mouillabilité) et la consommation en liquide nettoyant.

Selon une caractéristique optionnelle de l'invention, au moins un des orifices de projection de l'au moins une rangée comprend une section de passage du liquide nettoyant comprise entre 0,004 mm² et 0,070 mm².

Selon une caractéristique optionnelle de l'invention, au moins un des orifices de projection de l'au moins une rangée comprend une section de passage du liquide nettoyant comprise entre 0,008 mm² et 0,070 mm².

Selon une caractéristique optionnelle de l'invention, au moins un des orifices de projection de l'au moins une rangée comprend une section de passage du liquide nettoyant comprise entre 0,01 mm² et 0,070 mm².

Selon une caractéristique optionnelle de l'invention, au moins un des orifices de projection de l'au moins une rangée comprend une section de passage du liquide nettoyant comprise entre 0,02 mm² et 0,070 mm².

Selon une caractéristique optionnelle de l'invention, au moins un des orifices de projection de l'au moins une rangée comprend une section de passage du liquide nettoyant comprise entre 0,002 mm² et 0,050 mm².

Selon une caractéristique optionnelle de l'invention, au moins un des orifices de projection de l'au moins une rangée comprend une section de passage du liquide nettoyant comprise entre 0,008 mm² et 0,050 mm².

Selon une caractéristique optionnelle de l'invention, les orifices de projection d'une rangée sont espacés d'un pas compris entre 0,75 et 10mm le long de la direction d'allongement principal du déflecteur.

Selon une caractéristique optionnelle de l'invention, les orifices de projection d'une rangée sont espacés d'un pas compris entre 1,0 et 10mm le long de la direction d'allongement principal du déflecteur.

Selon une caractéristique optionnelle de l'invention, les orifices de projection d'une rangée sont espacés d'un pas compris entre 1,5 et 10mm le long de la direction d'allongement principal du déflecteur.

Selon une caractéristique optionnelle de l'invention, les orifices de projection d'une rangée sont espacés d'un pas compris entre 2,8 et 10mm le long de la direction d'allongement principal du déflecteur.

Selon une caractéristique optionnelle de l'invention, les orifices de projection d'une rangée sont espacés d'un pas compris entre 0,75 et 9mm le long de la direction d'allongement principal du déflecteur.

Selon une caractéristique optionnelle de l'invention, les orifices de projection d'une rangée sont espacés d'un pas compris entre 1 et 8mm le long de la direction d'allongement principal du déflecteur.

Selon une caractéristique optionnelle de l'invention, l'au moins un des orifices de projection comprend une section de passage du liquide nettoyant comprise entre 0,01 mm² et 0,070 mm², et les orifices de projection d'une rangée sont espacés d'un pas compris entre 1,5 et 10mm le long de la direction d'allongement principal du déflecteur.

Selon une caractéristique optionnelle de l'invention, l'au moins un des orifices de projection comprend une section de passage du liquide nettoyant comprise entre 0,2 mm² et 0,070 mm², et les orifices de projection d'une rangée sont espacés d'un pas compris entre 2,8 et 10mm le long de la direction d'allongement principal du déflecteur.

Selon une caractéristique optionnelle de l'invention, au moins un orifice de projection de l'au moins une rangée d'orifices de projection a une forme sensiblement circulaire.

En d'autres termes, l'au moins un canal de la pluralité de canaux s'étend depuis le tube de distribution jusqu'à l'orifice de projection en prenant une forme circulaire.

Selon une caractéristique optionnelle de l'invention, au moins un orifice de projection de l'au moins une rangée d'orifices de projection a une forme sensiblement rectangulaire.

En d'autres termes, l'au moins un canal s'étend depuis le tube de distribution jusqu'à l'orifice de projection en prenant une forme rectangulaire.

Selon une caractéristique optionnelle de l'invention, au moins un orifice de projection de l'au moins une rangée d'orifices de projection a une forme en étoile.

En d'autres termes, l'au moins un canal s'étend depuis le tube de distribution jusqu'à l'orifice de projection en prenant une forme en étoile.

Selon une autre caractéristique optionnelle de l'invention, la pluralité de canaux présente une même section entre le tube de distribution et l'orifice de projection dédié à chaque canal.

Selon une autre caractéristique optionnelle de l'invention, au moins un orifice de projection prend une forme différente d'un autre orifice de projection.

Selon une autre caractéristique optionnelle de l'invention, la rampe de projection comprend uniquement une rangée d'orifices de projection alignée le long de la direction d'allongement principal du déflecteur.

Selon une autre caractéristique optionnelle de l'invention, la rampe de projection comprenant au moins deux rangée d'orifices de projection distinctes alignées le long de la direction d'allongement principal du déflecteur.

Selon une autre caractéristique optionnelle de l'invention, la pluralité d'orifices de projection comprend un premier ensemble d'orifices de projection prenant une première forme et un deuxième ensemble d'orifices de projection prenant une deuxième forme, le premier ensemble d'orifices de projection étant reparti le long de la direction d'allongement principal du déflecteur en alternance avec le deuxième ensemble d'orifices de projection.

Selon une autre caractéristique optionnelle de l'invention, la rampe de projection comprend un tube de distribution s'étendant le long d'une direction d'allongement principal du déflecteur et une pluralité de canaux repartie le long de la direction d'allongement principal du déflecteur, chacun des canaux s'étendant entre le tube de distribution et l'orifice de projection de la pluralité d'orifices de projection.

Selon une autre caractéristique optionnelle de l'invention, la pluralité de canaux comprend au moins deux rangées de canaux distinctes alignées le long de la direction d'allongement principal du déflecteur. On comprend que le nombre de rangées de canaux distinctes est d'au moins deux et peut être de trois, quatre ou plus.

Selon une autre caractéristique optionnelle de l'invention, la rampe de projection comprend une pluralité de canaux repartie le long de la direction d'allongement principal du déflecteur, la pluralité de canaux comprend au moins deux alignements de canaux distincts alignés le long d'une direction sécante par rapport à la direction d'allongement principal du déflecteur.

En d'autres termes, la pluralité de canaux comprend au moins deux alignements de canaux distincts alignés le long d'une direction sécante par rapport à la direction d'allongement principal du déflecteur.

Selon une autre caractéristique optionnelle de l'invention, la pluralité de canaux comprend au moins deux alignements de canaux alignés le long d'une direction perpendiculaire par rapport à la direction d'allongement principal du déflecteur.

Selon une autre caractéristique optionnelle de l'invention, dans lequel la rampe de projection comprend une pluralité de rangées de canaux reparties radialement autour du tube de distribution sur un secteur angulaire compris entre 5° et 30°. Ce secteur angulaire est le secteur en regard de la zone à essuyer de la surface vitrée par le balai d'essuyage.

Selon une autre caractéristique optionnelle de l'invention, au moins certains canaux de la pluralité de canaux sont disposés en quinconce au travers du corps du déflecteur.

Selon une autre caractéristique optionnelle de l'invention, les orifices de projection de l'au moins une rangée d'orifices de projection sont répartis de façon uniforme le long de la direction d'allongement principal du déflecteur.

En d'autres termes, la pluralité de canaux est répartie de façon uniforme le long de la direction d'allongement principal du déflecteur. On comprend par « uniforme » que la pluralité de canaux forme un motif qui se répète plusieurs fois le long de la direction d'allongement principal du déflecteur, un motif étant formé par au moins un orifice de projection.

Selon une autre caractéristique optionnelle de l'invention, les orifices de projection de l'au moins une rangée d'orifices de projection sont répartis irrégulièrement le long de la direction d'allongement principal du déflecteur.

En d'autres termes, la pluralité de canaux est répartie irrégulièrement le long de la direction d'allongement principal du déflecteur.

Selon une autre caractéristique optionnelle de l'invention, la section totale des orifices de projection est comprise entre 1 mm² et 3 mm². La section totale des orifices de projection correspond à la somme des sections de l'ensemble des orifices de projection.

Selon un premier exemple, la rampe de projection peut comprendre un certain nombre de canaux ou d'orifices de projection espacés d'un certain pas et présentant une section de passage définie.

Selon un deuxième exemple, la rampe de projection peut comprendre un nombre plus important de canaux ou d'orifices de projection car espacés d'un pas inférieur par rapport au premier exemple, les canaux présentant une section de passage moins importante que celle des orifices du premier exemple.

Selon un troisième exemple, la rampe de projection peut comprendre un nombre moins important de canaux ou d'orifices de projection car espacés d'un pas supérieur par rapport au premier exemple, les canaux présentant une section de passage plus importante que celle des orifices du premier exemple.

Selon une autre caractéristique optionnelle de l'invention, le support de la lame d'essuyage est disposé dans le logement du déflecteur.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig.1] est une représentation schématique d'un véhicule équipé d'un système d'essuyage comprenant un balai d'essuyage selon l'invention ;
[Fig.2] est une vue de détails du balai d'essuyage selon l'invention ;
[Fig.3] est une représentation en perspective d'un déflecteur du balai d'essuyage selon l'invention ;
[Fig.4] est une vue de détails du déflecteur illustré sur la [Fig.3] ;
[Fig.5] est une représentation d'un premier mode de réalisation d'une pluralité d'orifices de projection du déflecteur illustré sur la [Fig.3] ;
[Fig.6] est une représentation d'un deuxième mode de réalisation d'une pluralité d'orifices de projection du déflecteur illustré sur la [Fig.3].

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Dans la description qui va suivre, les dénominations « longitudinale », « transversale » et « verticale » se réfèrent à l'orientation d'un déflecteur selon l'invention. Une direction longitudinale correspond à une direction principale d'extension du déflecteur, cette direction longitudinale étant parallèle à un axe longitudinal L d'un L, V, T illustré sur les figures. Une direction verticale correspond à une direction le long de laquelle une aile du déflecteur s'étend, cette direction verticale étant parallèle à un axe vertical V du repère L, V, T et cet axe vertical V étant perpendiculaire à l'axe longitudinal L. Enfin, une direction transversale correspond à une direction parallèle à un axe transversal T du repère L, V, T, cet axe transversal T étant perpendiculaire à l'axe longitudinal L et l'axe vertical V.

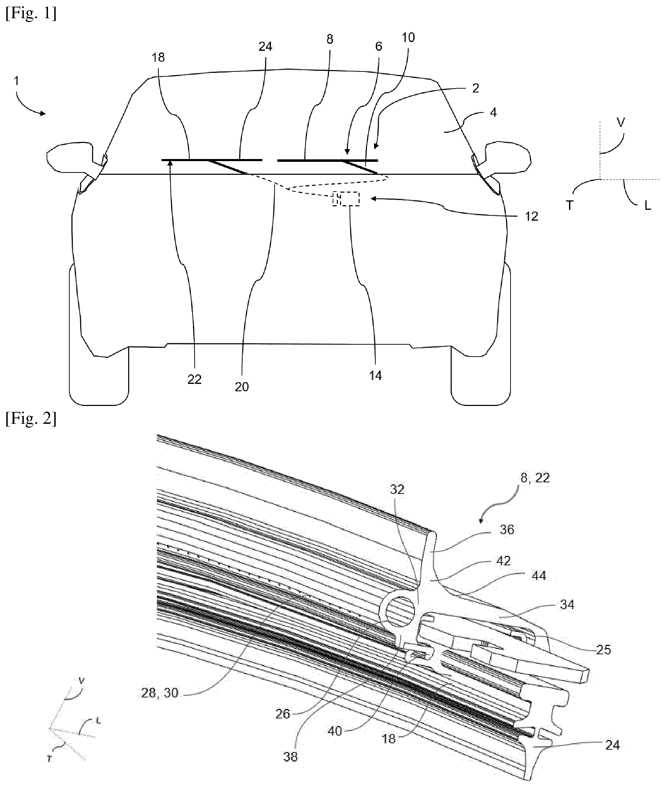

Tel qu'illustré sur la [Fig.1], un véhicule 1 est équipé d'un système d'essuyage 2 disposé sur une surface vitrée 4 du véhicule 1. Le système d'essuyage 2 comprend au moins un premier dispositif d'essuyage 6 composé d'un premier balai d'essuyage 8 et d'un premier bras d'essuyage 10. Le premier bras d'essuyage 10 est solidaire par l'une de ses extrémités au véhicule 1 et par l'autre de ses extrémités au premier balai d'essuyage 8, le premier balai d'essuyage 8 étant disposé sur la surface vitrée 4 du véhicule 1. Plus précisément, le premier bras d'essuyage 10 est solidaire d'un bras d'entrainement constitutif d'un moteur électrique, le bras d'entrainement et le moteur électrique n'étant pas représentés sur l'ensemble des figures.

Le moteur électrique tend à entraîner le premier bras d'essuyage 10 dans un mouvement de va-et-vient, le premier bras d'essuyage 10 entraînant ainsi le premier balai d'essuyage 8 dans ce mouvement de va-et-vient sur la surface vitrée 4 du véhicule 1. Par ce mouvement, le premier balai d'essuyage 8 racle sur la surface vitrée 4 du véhicule 1 pour la nettoyer. Le système d'essuyage 2 comprend un deuxième dispositif d'essuyage 6 comprenant les mêmes caractéristiques que le premier dispositif d'essuyage 6 en comprenant un deuxième balai d'essuyage 8 et un deuxième bras d'essuyage 10.

En outre, le terme « dispositif d'essuyage 6 » peut faire indifféremment référence au premier dispositif d'essuyage 6 ainsi qu'au deuxième dispositif d'essuyage 6. Pareillement, le terme « bras d'essuyage 10 » peut faire indifféremment référence au premier bras d'essuyage 10 ainsi qu'au deuxième bras d'essuyage 10, le terme « balai d'essuyage 8 » pouvant également faire indifféremment référence au premier balai d'essuyage 8 ainsi qu'au deuxième balai d'essuyage 8.

De plus, les composants du deuxième dispositif d'essuyage 6 sont identiques aux composants du premier dispositif d'essuyage 6. Ainsi, la description des caractéristiques des composants du premier dispositif d'essuyage 6 qui suit est applicable aux composants du deuxième dispositif d'essuyage 6, notamment pour le deuxième balai d'essuyage 8 et le deuxième bras d'essuyage 10.

Le véhicule 1 est également équipé d'un système de nettoyage 12 projetant un liquide nettoyant sur la surface vitrée 4 du véhicule 1 pour optimiser l'essuyage de la surface vitrée 4 par le système d'essuyage 2. Le système de nettoyage 12 comprend pour cela une pompe 14 propulsant à travers un réseau de distribution 16 le liquide nettoyant vers au moins une rampe de projection 18 depuis un réservoir. Le réseau de distribution 16 relie la pompe 14 à au moins une première rampe de projection 18 ménagé sur le premier balai d'essuyage 8. Le réseau de distribution 16 relie la pompe 14 à une deuxième rampe de projection 18 similaire à la première rampe de projection 18, cette deuxième rampe de projection 18 étant disposée sur le deuxième balai d'essuyage 8. Dans la suite de la description, le terme « rampe de projection 18 » fera indifféremment référence à l'une et/ou l'autre des première et deuxième rampes de projection 18.

Tel que schématiquement représenté sur les figures 1 et 2, le balai d'essuyage 8 selon l'invention comprend au moins un déflecteur 22 et une lame d'essuyage 24 s'étendant principalement tous deux le long d'une direction longitudinale L. La lame d'essuyage 24 est l'élément du balai d'essuyage 8 en contact direct avec la surface vitrée 4 du véhicule 1. Le déflecteur 22 est quant à lui l'élément qui optimise l'aérodynamisme du balai d'essuyage 8 en utilisant une force générée par le vent, lorsque le véhicule 1 circule, pour plaquer et maintenir la lame d'essuyage 24 en contact avec la surface vitrée 4 du véhicule 1. Par ailleurs, la lame d'essuyage 24 comprend un support destiné à être porté par le déflecteur 22, ce dernier comprenant un logement 25 du support. On comprend que le support de la lame d'essuyage 24 coopère avec le logement 25 du déflecteur 22 pour rendre solidaire la lame d'essuyage 24 du déflecteur 22.

On va maintenant décrire plus en détails le déflecteur 22 en référence notamment aux figures 2 à 6.

Sur les figures 2 à 4 est plus particulièrement illustré le déflecteur 22 du balai d'essuyage 8 selon l'invention. Ce dernier comprend au moins la rampe de projection 18 d'un liquide nettoyant, la rampe de projection 18 comprenant au moins un tube de distribution 26 du liquide nettoyant et une pluralité de canaux 28 s'étendant entre le tube de distribution 26 et une pluralité d'orifices de projection 30. Plus particulièrement, le tube de distribution 26 est relié au réseau de distribution 16 du système de nettoyage 12, la pompe 14 de ce dernier forçant la circulation de liquide nettoyant jusqu'au tube de distribution 26. Le liquide nettoyant circule ensuite à travers les canaux 28 depuis le tube de distribution 26 vers l'orifice de projection 30 attribué à chaque canal 26. On comprend que le liquide nettoyant est projeté contre la surface vitrée 4 du véhicule 1 au niveau de l'orifice de projection 30. Dans cette configuration, la pompe 14 du système de nettoyage 12 permet de forcer la circulation du liquide nettoyant depuis le réservoir 20 jusqu'à l'orifice de projection 30.

Une description plus détaillée de la rampe de projection 18 sera réalisée à la suite de la description générale du déflecteur 22 qui suit et qui fait référence aux figures 2 à 4.

Le déflecteur 22 comprend un corps 32 composé par au moins une paroi supérieure 34 de laquelle fait saillie au moins une aile 36 et la rampe de projection 18.

Selon l'exemple illustré sur les figures 2 à 4, le corps 32 comprend au moins deux parois latérales 38 et une paroi supérieure 34 qui participent à délimiter le logement 25 du support de la lame d'essuyage 24. Plus particulièrement, la paroi supérieure 34 s'étend principalement dans un plan parallèle aux directions longitudinale L et transversale T. Les parois latérales 38 s'étendent quant à elle chacune dans un plan parallèle aux directions longitudinale L et verticale V et chacune depuis l'une des extrémités transversales de la paroi supérieure 34. Chacune des parois latérales 38 s'étend en regard de l'autre paroi latérale 38 depuis la paroi supérieure 34 à l'opposé de l'aile 36.

En d'autres termes, les parois latérales 38 et la paroi supérieure 34 du déflecteur 22 s'étendent de sorte qu'une section des parois latérales 38 et de la paroi supérieure 34 prennent une forme de « U », la section étant vue dans un plan perpendiculaire par rapport à une direction d'allongement principal A du déflecteur 22, cette direction d'allongement principal A étant sensiblement parallèle à la direction longitudinale L. On comprend que les parois latérales 38 formant les bras du « U » et que la paroi supérieure 34 forme la base du « U ».

Chacune des parois latérales 38 présente à une extrémité libre une griffe de fixation 40 s'étendant depuis ladite extrémité libre vers l'autre griffe de fixation 40. Chaque griffe de fixation 40 participe d'une part à délimiter le logement 25 du support de la lame d'essuyage et d'autre part à rendre solidaire le support de la lame d'essuyage 24 du déflecteur 22.

L'aile 36 comprend une base 42 reliant une portion de l'aile 36 s'étendant dans un plan parallèle aux directions longitudinale L et verticale V à la paroi supérieure 34. Plus particulièrement, l'aile 36 présente une courbure 44 au niveau de sa base 42, cette courbure 44 reliant la paroi supérieure 34 à une extrémité libre de l'aile 36, faisant ainsi le lien entre le plan d'extension principale de la paroi supérieure 34 et le plan d'extension principale de l'aile 36. La courbure 44 au niveau de la base 42 de l'aile 36 apporte au déflecteur 22 un avantage aérodynamique permettant de maintenir appuyer la lame d'essuyage 24 contre la surface vitrée 4 du véhicule 1, notamment lorsque ce-dernier circule.

Tel que plus particulièrement visible sur les figures 2 à 4, la rampe de projection 18 s'étend principalement le long de la direction d'allongement principal A à travers le corps 32 du déflecteur 22, par exemple au niveau d'une des parois latérales 38 du corps 32.

Dans le mode de réalisation de la [Fig.2], la rampe de projection 18 comprend une unique rangée d'orifices de projection 30.

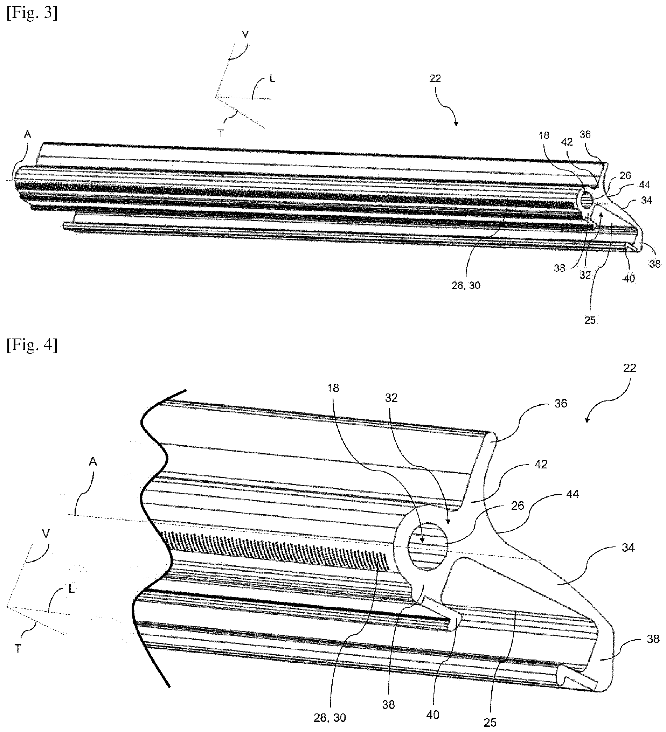

Dans le mode de réalisation des figures 3 à 6, la rampe de projection 18 comprend au moins deux rangées d'orifices de projection 30.

Selon l'invention, au moins un des orifices de projection 30 comprend une section de passage du liquide nettoyant comprise entre 0,002 mm² et 0,070 mm², et les orifices de projection 30 pour une rangée sont espacés d'un pas compris entre 0,15 et 10mm le long de la direction d'allongement principal A du déflecteur 22.

En d'autres termes, au moins un des canaux 28 comprend une section de passage du liquide nettoyant comprise entre 0,002 mm² et 0,070 mm², et le pas entre les canaux 28 d'une même rangée est compris entre 0,15 et 10mm le long de la direction d'allongement principal A du déflecteur 22. Selon une caractéristique optionnelle de l'invention, tous les canaux du déflecteur présentent une section de passage du liquide nettoyant comprise entre 0,01 mm² et 0,070 mm². Selon une caractéristique optionnelle de l'invention, tous les canaux du déflecteur présentent une section de passage du liquide nettoyant comprise entre 0,02 mm² et 0,070 mm².

Une section du canal 28 présentant une surface comprise entre 0,002 mm² et 0,070 mm² optimise la brumisation du liquide nettoyant lorsque le liquide nettoyant circule à travers le canal 28 depuis le tube de distribution 26 vers l'orifice de projection 30. On comprend de cela que le liquide nettoyant circule à l'état liquide à l'entrée du canal 28 selon le sens de circulation du liquide nettoyant dans le canal 28, le liquide nettoyant à l'état liquide est ensuite brumisé au niveau de la section présentant une surface comprise entre 0,002 mm² et 0,070 mm², puis est expulsé sous forme de brume au niveau de l'orifice de projection 30. Par ailleurs, cette brumisation augmente la mouillabilité de la surface vitrée 4 du véhicule 1, notamment au niveau de la zone à essuyer par le balai d'essuyage 8.

La section de passage du canal 28 comprise entre 0,002 mm² et 0,070 mm² est préférentiellement proche de l'orifice de projection 30. On comprend que l'effet de brumisation produit par cette section du canal 28 est optimisé lorsque cette section est installée au plus proche de l'orifice de projection 30.

Selon l'invention, la section de passage du canal 28 comprise entre 0,002 mm² et 0,070 mm², est confondue avec l'orifice de projection 30. En d'autres termes, c'est l'orifice de projection 30 qui présente une section de passage du liquide nettoyant comprise entre 0,002 mm² et 0,070 mm².

Selon une alternative de l'invention, la section de passage du canal 28 comprise entre 0,002 mm² et 0,070 mm², n'est pas confondue avec l'orifice de projection 30.

Selon l'exemple illustré ici, chaque canal 28 de la pluralité de canaux 28 présente une section de passage du liquide nettoyant comprise entre 0,002 mm² et 0,070 mm².

Selon une caractéristique optionnelle de l'invention, au moins un des canaux 28 comprend une section de passage du liquide nettoyant comprise 0,002 mm² et 0,070 mm².

De plus, le pas entre les orifices de projection 30 d'une même rangée, compris entre 0,15 et 10mm, optimise la répartition du liquide nettoyant brumisé contre la surface vitrée 4 du véhicule 1 et permet ainsi d'obtenir le meilleur compromis entre la qualité de nettoyage (i.e. mouillabilité) et la consommation en liquide nettoyant.

En effet, le pas entre les orifices de projection 30 d'une même rangée disposés tout le long du déflecteur 22, assure une répartition régulière du liquide nettoyant brumisé tout le long du déflecteur 22. On comprend de cela que la répartition du liquide nettoyant brumisé tout le long du déflecteur 22 favorise une meilleure mouillabilité tout le long du déflecteur 22 et permet une répartition homogène du déflecteur 22, évitant ainsi un phénomène de traces laissées sur la surface vitrée 4 du véhicule 1, tout en optimisant la consommation en liquide nettoyant.

Cette combinaison de caractéristiques du pas entre la pluralité de canaux 28 / orifices de projection 30 permet ainsi d'optimiser d'une part le phénomène de brumisation du liquide nettoyant le long du déflecteur 22 et d'autre part une meilleure mouillabilité de la surface vitrée 4 du véhicule 1 également tout le long du déflecteur 22.

Selon une caractéristique de l'invention, la section totale des orifices de projection 30 est comprise entre 1 mm² et 3 mm². On comprend par « section totale » la somme de l'ensemble des sections de passage des orifices de projection 30 de la rampe de projection 18.

Selon un premier exemple de réalisation de l'invention, la rampe de projection 18 peut comprendre un certain nombre de canaux 28 espacés d'un certain pas dont les orifices de projection 30 présentent une section de passage définie, la section de passage de chaque orifice de projection 30 étant par exemple comprise entre 1 mm² et 3 mm². La somme des sections de passage des orifices de projection 30 visées ici correspond à la section totale mentionnée ci-dessus.

Selon un deuxième exemple de réalisation de l'invention, la rampe de projection 18 peut comprendre un nombre plus important de canaux 28 espacés d'un pas plus petit que dans le premier exemple, les orifices de projection 30 dédiés à chacun des canaux 28 présentant une section de passage moins importante que celle des orifices de projection 30 du premier exemple, c'est-à-dire une section de passage par exemple inférieure à 1 mm².

Selon un troisième exemple de réalisation de l'invention, la rampe de projection 18 peut comprendre un nombre moins important de canaux 28 espacé d'un pas plus important que dans le premier exemple, les orifices de projection 30 dédiés à chacun des canaux 28 présentant une section de passage plus importante que celle des orifices de projection 30 du premier exemple, c'est-à-dire une section de passage par exemple supérieure à 3mm².

Tel qu'illustré sur les figures 2 à 4, la pluralité de canaux 28 est répartie de façon uniforme le long de la direction d'allongement principal A du déflecteur 22. On comprend par « uniforme » que la pluralité de canaux 28 forme un motif qui se répète plusieurs fois le long de la direction d'allongement principal A du déflecteur 22, un motif étant formé par au moins un orifice de projection 30.

Sur l'exemple illustré ici sur les figures 3 et 4, un motif de canaux 28 est formé et prend la forme d'une fente s'étendant au moins partiellement radialement autour du tube de distribution 26. Ce motif en forme de fente est reproduit à intervalle régulier le long du tube de distribution 26, c'est-à-dire le long de la direction d'allongement principal A du déflecteur 22.

Selon une autre alternative de l'invention, la pluralité de canaux 28 est répartie irrégulièrement le long de la direction d'allongement principal A du déflecteur 22. On comprend ici qu'un motif formé par au moins un canal 28 n'est pas reproduit le long de la direction d'allongement principal A, une première distance séparant deux premiers canaux 28 voisins l'un de l'autre étant différente d'une deuxième distance séparant deux autres canaux 28 voisins l'un de l'autre.

De plus, la pluralité d'orifices de projection 30, et par extension la pluralité de canaux 28 est, selon une caractéristique optionnelle de l'invention, reparties radialement autour du tube de distribution 26 sur un secteur angulaire compris entre 5° et 30°. Ce secteur angulaire correspond au secteur en regard de la zone à essuyer de la surface vitrée 4 par le balai d'essuyage 8. Ce secteur angulaire est mesuré par exemple depuis un plan d'extension principale de la paroi latérale 38, ce plan étant parallèle aux directions longitudinale L et verticale V. De la sorte, le liquide nettoyant brumisé est projeté au niveau de l'orifice de projection 30 directement sur la surface vitrée 4 du véhicule 1, limitant ainsi la perte de liquide nettoyant brumisé dans l'environnement extérieur du véhicule 1.

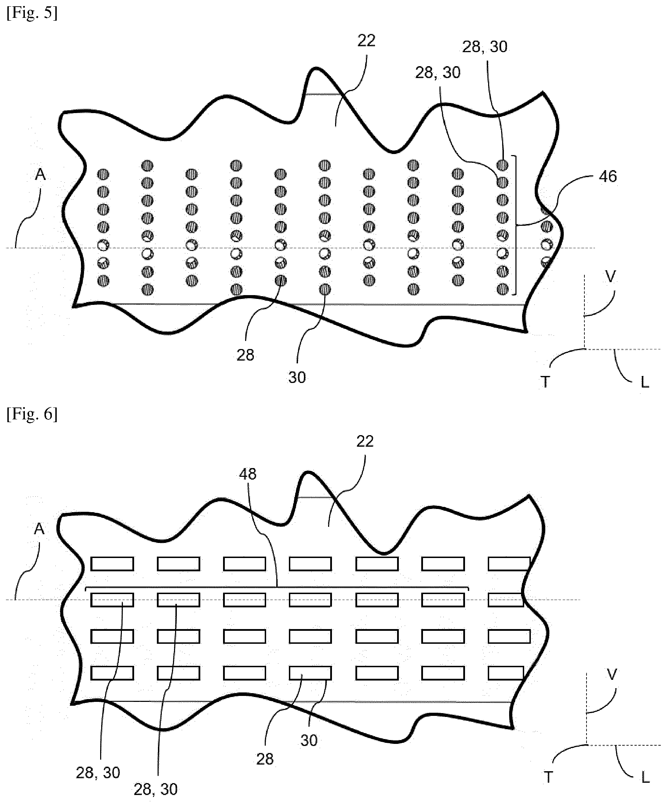

On va maintenant décrire plus en détails un premier mode de réalisation de l'invention illustré sur la [Fig.5] avant de décrire un deuxième mode de réalisation de l'invention en référence à la [Fig.6].

Selon un premier mode de réalisation de l'invention et tel qu'illustré sur la [Fig.5], au moins un canal 28 de la pluralité de canaux 28 s'étend depuis le tube de distribution 26 jusqu'à l'orifice de projection 30 en prenant une forme circulaire.

Le canal 28 s'étend sous la forme d'un cylindre évidé entre le tube de distribution 26 et l'orifice de projection 30. On comprend de la sorte que le canal 28 présente une seule et même section entre le tube de distribution 26 et l'orifice de projection 30.

Selon une alternative de l'invention, le canal 28 s'étend sous la forme d'un cône entre le tube de distribution 26 et l'orifice de projection 30. La section de passage du canal 28 peut ainsi s'ouvrir sur l'extérieur, c'est-à-dire qu'une section de passage du canal 28 tend à augmenter au fur et à mesure que l'on se rapproche de l'orifice de projection 30. Inversement, la section de passage du canal 28 peut se fermer sur l'extérieur, c'est-à-dire qu'une section de passage du canal 28 tend à diminuer au fur et à mesure que l'on se rapproche de l'orifice de projection 30.

Selon une caractéristique optionnelle de l'invention, la pluralité de canaux 28 présente une même section entre le tube de distribution 26 et l'orifice de projection 30 dédié à chaque canal 28. Plus précisément, chaque canal 28 présente une forme similaire et s'étend entre le tube de distribution 26 et l'orifice de projection 30 en prenant la même forme.

Par ailleurs, et tel qu'illustré sur la [Fig.5], la pluralité de canaux 28 comprend au moins deux alignements 46 de canaux 28 alignés le long d'une direction sécante par rapport à la direction d'allongement principal A du déflecteur 22.

On comprend qu'au moins deux premiers canaux 28 sont alignés le long d'une direction sécante à la direction d'allongement principal A en formant un premier alignement 46, et qu'au moins deux autres canaux 28 sont alignés le long d'une direction sécante à la direction d'allongement principal A en formant un deuxième alignement 46, le premier alignement 46 et le deuxième alignement 46 s'étendant parallèlement l'un par rapport à l'autre.

Selon une caractéristique optionnelle de l'invention, le premier alignement 46 et le deuxième alignement 46 s'étendent perpendiculairement à la direction d'allongement principal A du déflecteur 22.

Par ailleurs et tel que plus particulièrement visible sur la [Fig.5], au moins certains canaux 28 de la pluralité de canaux 28 sont répartis en quinconce au travers du corps 32 du déflecteur 22. On entend par « quinconce » qu'un premier groupement d'orifices de projection 30 s'alignent le long d'une première direction parallèle à la direction d'allongement principal A et qu'un deuxième groupement d'orifices de projection 30 s'alignent le long d'une deuxième direction parallèle à la direction d'allongement principal A, la première direction étant distincte de la deuxième direction. Autrement dit, les orifices de projection 30 sont décalés radialement les uns des autres tout en s'alignant les uns par rapport aux autres.

On va maintenant décrire plus en détails un deuxième mode de réalisation de l'invention illustré sur la [Fig.6].

Selon un deuxième mode de réalisation de l'invention et tel qu'illustré sur la [Fig.6], au moins un canal 28 s'étend depuis le tube de distribution 26 jusqu'à l'orifice de projection 30 en prenant une forme rectangulaire. Dans cette configuration, le canal 28 peut s'étendre sous la forme d'un parallélépipède rectangle évidé depuis le tube de distribution 26 jusqu'à l'orifice de projection 30 en présentant une même section tout le long. Cependant, un canal 28 s'étendant sous la forme d'un parallélépipède rectangle évidé et dont la section du canal 28 varie entre le tube de distribution 26 et l'orifice de projection 30 ne sortirait pas du cadre de l'invention.

Tel que plus particulièrement visible sur la [Fig.6], la pluralité de canaux 28 comprend au moins deux rangées 48 de canaux 28 alignés le long de la direction d'allongement principal A du déflecteur 22. De la sorte, la pluralité de canaux 28 est organisée en rangées 48 disposées parallèlement les unes par rapport aux autres et parallèlement à la direction d'allongement principal A du déflecteur 22. La pluralité d'orifices de projection 30 s'étend également en rangées 48 le long d'une direction parallèle à la direction d'allongement principal A du déflecteur 22.

De manière cumulative, la pluralité de canaux 28 et la pluralité d'orifices de projection 30 peuvent s'organiser également en forme d'alignements 46 le long d'une direction sécante, voire perpendiculaire, à la direction d'allongement principal A du déflecteur 22 en plus des rangées 48 décrites auparavant. On comprend de la sorte que les canaux 28 et les orifices de projection 30 sont alignés les uns par aux autres en formant un quadrillage.

Selon une alternative de l'invention, au moins un canal 28 s'étend depuis le tube de distribution 26 jusqu'à l'orifice de projection 30 en prenant une forme en étoile. Les canaux 28 peuvent également s'étendre en présentant une section en forme d'étoile depuis le tube de distribution 26 jusqu'à l'orifice de projection 30.

Par ailleurs, au moins un orifice de projection 30 prend une forme différente d'un autre orifice de projection 30. On comprend ici qu'une majorité d'orifices de projection 30 s'étend sous une première forme, par exemple circulaire, et qu'au moins un orifice de projection 30 s'étend sous une deuxième forme, par exemple rectangulaire.

Dans cette configuration, on peut imaginer que la pluralité d'orifices de projection 30 comprend un premier ensemble d'orifices de projection 30 prenant une première forme et un deuxième ensemble d'orifices de projection 30 prenant une deuxième forme, le premier ensemble d'orifices de projection 30 étant reparti le long de la direction d'allongement principal A du déflecteur 22 en alternance avec le deuxième ensemble d'orifices de projection 30. Cette alternance peut par exemple être une alternance entre un premier alignement 46 d'orifices de projection 30 prenant la première forme et un deuxième alignement 46 d'orifices de projection 30 prenant la deuxième forme.

La présente invention ne saurait toutefois se limiter aux moyens et configurations décrits et illustrés ici et elle s'étend également à tout moyen et configuration équivalents ainsi qu'à toute combinaison techniquement opérante de tels moyens. En particulier, les rangées 48 et les alignements 46 des orifices peuvent être organisés en quinconce, tel que cela a été décrit plus tôt dans la description. Par ailleurs, les orifices de projection 30, tout comme une section d'au moins un canal 28, peut prendre une forme différente de celles qui ont été décrites ci-dessus, tant qu'ils atteignent le but fixé par l'invention.

## Revendications

1. Balai d'essuyage (8) d'un système d'essuyage (2) pour un véhicule (1) comprenant au moins une lame d'essuyage (24) portée par un support et configurée pour essuyer une surface vitrée (4) d'un véhicule (1), le balai d'essuyage (8) comprenant un déflecteur (22) configuré pour être relié à un système de nettoyage (12) distribuant du liquide nettoyant, le déflecteur (22) comprenant un corps (32) dans lequel est ménagé une rampe de projection (18) du liquide nettoyant configurée pour être reliée au système de nettoyage (12), la rampe de projection (18) s'étendant le long d'une direction d'allongement principal (A) du déflecteur (22) et comprenant au moins une rangée (48) d'orifices de projection (30), **caractérisé en ce qu'**au moins un des orifices de projection (30) comprend une section de passage du liquide nettoyant comprise entre 0,002 mm² et 0,070 mm², et **en ce que** les orifices de projection (30) d'une rangée (48) sont espacés d'un pas compris entre 0,15 et 10mm le long de la direction d'allongement principal (A) du déflecteur (22).

2. Balai d'essuyage (8) selon la revendication 1, dans lequel l'au moins un des orifices de projection (30) comprend une section de passage du liquide nettoyant comprise entre 0,010 mm² et 0,070 mm², et dans lequel les orifices de projection (30) d'une rangée (48) sont espacés d'un pas compris entre 1 et 10mm le long de la direction d'allongement principal (A) du déflecteur (22).

3. Balai d'essuyage (8) selon la revendication 1 ou 2, dans lequel l'au moins un des orifices de projection (30) comprend une section de passage du liquide nettoyant comprise entre 0,020 mm² et 0,070 mm², et les orifices de projection (30) d'une rangée (48) sont espacés d'un pas compris entre 1 et 5mm le long de la direction d'allongement principal (A) du déflecteur (22).

4. Balai d'essuyage (8) selon l'une quelconque des revendications précédentes 1 à 3, dans lequel au moins un orifice de projection (30) de l'au moins une rangée (48) d'orifices de projection (30) a une forme sensiblement circulaire.

5. Balai d'essuyage (8) selon l'une quelconque des revendications précédentes 1 à 3, dans lequel au moins un orifice de projection (30) de l'au moins une rangée (48) d'orifices de projection (30) a une forme sensiblement rectangulaire.

6. Balai d'essuyage (8) selon l'une quelconque des revendications précédentes, dans lequel la rampe de projection (18) comprend uniquement une rangée (48) d'orifices de projection (30) alignée le long de la direction d'allongement principal (A) du déflecteur (22).

7. Balai d'essuyage (8) selon l'une quelconque des revendications précédentes 1 à 5, dans lequel la rampe de projection (18) comprenant au moins deux rangées (48) d'orifices de projection (30) distinctes alignées le long de la direction d'allongement principal (A) du déflecteur (22).

8. Balai d'essuyage (8) selon l'une quelconque des revendications précédentes, dans lequel la rampe de projection (18) comprend un tube de distribution (26) s'étendant le long d'une direction d'allongement principal (A) du déflecteur (22) et une pluralité de canaux (28) repartie le long de la direction d'allongement principal (A) du déflecteur (22), chacun des canaux (28) s'étendant entre le tube de distribution (26) et l'orifice de projection (30) de la pluralité d'orifices de projection (30).

9. Balai d'essuyage (8) selon la revendication précédente, dans lequel la pluralité de canaux (28) comprend au moins deux alignements (46) de canaux (28) distincts alignés le long d'une direction sécante par rapport à la direction d'allongement principal (A) du déflecteur (22).

10. Balai d'essuyage (8) selon la revendication 8 ou 9, dans lequel la rampe de projection (18) comprend une pluralité de rangées (48) de canaux (28) reparties radialement autour du tube de distribution (26) sur un secteur angulaire compris entre 5° et 30°.

11. Balai d'essuyage (8) selon l'une quelconque des revendications précédentes 8 à 10, dans lequel au moins certains canaux (28) de la pluralité de canaux (28) sont disposés en quinconce au travers du corps (32) du déflecteur (22).

12. Balai d'essuyage (8) selon l'une quelconque des revendications précédentes, dans lequel les orifices de projection (30) de l'au moins une rangée (48) d'orifices de projection (30) sont répartis de façon uniforme le long de la direction d'allongement principal (A) du déflecteur (22).

13. Balai d'essuyage (8) selon l'une quelconque des revendications précédentes, dans lequel la section totale des orifices de projection (30) est comprise entre 1mm² et 3mm².

## Patentansprüche

1. Wischerblatt (8) eines Wischersystems (2) für ein Fahrzeug (1) mit mindestens einem Wischleiste (24), das von einem Träger getragen wird und zum Wischen einer verglasten Oberfläche (4) eines Fahrzeugs (1) konfiguriert ist, wobei das Wischerblatt (8) einen Deflektor (22) umfasst, der konfiguriert ist, um mit einem Reinigungssystem (12) verbunden zu werden, das Reinigungsflüssigkeit verteilt, wobei der Deflektor (22) einen Körper (32) umfasst, in dem eine Projektionsrampe (18) für die Reinigungsflüssigkeit ausgebildet ist, die konfiguriert ist, um mit dem Reinigungssystem (12) verbunden zu werden, wobei sich die Projektionsrampe (18) entlang einer Hauptlängsrichtung (A) des Deflektors (22) erstreckt und mindestens eine Reihe (48) von Projektionsöffnungen (30) umfasst, **dadurch gekennzeichnet, dass** mindestens eine der Projektionsöffnungen (30) einen Reinigungsflüssigkeitsdurchgangsabschnitt zwischen 0,002 mm² und 0,070 mm² umfasst, und dass die Projektionsöffnungen (30) einer Reihe (48) mit einem Abstand zwischen 0,15 und 10 mm entlang der Hauptlängsrichtung (A) des Deflektors (22) beabstandet sind.

2. Wischerblatt (8) nach Anspruch 1, wobei die mindestens eine Projektionsöffnung (30) einen Reinigungsflüssigkeitsdurchgangsabschnitt zwischen 0,010 mm² und 0,070 mm² umfasst und wobei die Projektionsöffnungen (30) einer Reihe (48) mit einem Abstand zwischen 1 und 10 mm entlang der Hauptlängsrichtung (A) des Deflektors (22) beabstandet sind.

3. Wischerblatt (8) nach Anspruch 1 oder 2, wobei die mindestens eine Projektionsöffnung (30) einen Reinigungsflüssigkeitsdurchgangsabschnitt zwischen 0,020 mm² und 0,070 mm² umfasst und die Projektionsöffnungen (30) einer Reihe (48) mit einem Abstand zwischen 1 und 5 mm entlang der Hauptlängsrichtung (A) des Deflektors (22) beabstandet sind.

4. Wischerblatt (8) nach einem der vorhergehenden Ansprüche 1 bis 3, wobei mindestens eine Projektionsöffnung (30) der mindestens einen Reihe (48) von Projektionsöffnungen (30) eine im Wesentlichen kreisförmige Form aufweist.

5. Wischerblatt (8) nach einem der vorhergehenden Ansprüche 1 bis 3, wobei mindestens eine Projektionsöffnung (30) der mindestens einen Reihe (48) von Projektionsöffnungen (30) eine im Wesentlichen rechteckige Form aufweist.

6. Wischerblatt (8) nach einem der vorhergehenden Ansprüche, wobei die Projektionsrampe (18) nur eine Reihe (48) von Projektionsöffnungen (30) umfasst, die entlang der Hauptlängsrichtung (A) des Deflektors (22) ausgerichtet sind.

7. Wischerblatt (8) nach einem der vorhergehenden Ansprüche 1 bis 5, wobei die Projektionsrampe (18) mindestens zwei verschiedene Reihen (48) von Projektionsöffnungen (30) umfasst, die entlang der Hauptlängsrichtung (A) des Deflektors (22) ausgerichtet sind.

8. Wischerblatt (8) nach einem der vorhergehenden Ansprüche, wobei die Projektionsrampe (18) ein Verteilerrohr (26), das sich entlang einer Hauptlängsrichtung (A) des Deflektors (22) erstreckt, und eine Vielzahl von Kanälen (28) umfasst, die entlang der Hauptlängsrichtung (A) des Deflektors (22) verteilt sind, wobei sich jeder der Kanäle (28) zwischen dem Verteilerrohr (26) und der Projektionsöffnung (30) der Vielzahl von Projektionsöffnungen (30) erstreckt.

9. Wischerblatt (8) nach dem vorhergehenden Anspruch, wobei die Vielzahl von Kanälen (28) mindestens zwei verschiedene Ausrichtungen (46) von Kanälen (28) umfasst, die entlang einer Sekantenrichtung relativ zur Hauptlängsrichtung (A) des Deflektors (22) ausgerichtet sind.

10. Wischerblatt (8) nach Anspruch 8 oder 9, wobei die Projektionsrampe (18) eine Vielzahl von Reihen (48) von Kanälen (28) umfasst, die radial um das Verteilerrohr (26) über einen Winkelbereich zwischen 5° und 30° verteilt sind.

11. Wischerblatt (8) nach einem der vorhergehenden Ansprüche 8 bis 10, wobei mindestens einige Kanäle (28) der Vielzahl von Kanälen (28) versetzt über den Körper (32) des Deflektors (22) angeordnet sind.

12. Wischerblatt (8) nach einem der vorhergehenden Ansprüche, wobei die Projektionsöffnungen (30) der mindestens einen Reihe (48) von Projektionsöffnungen (30) gleichmäßig entlang der Hauptlängsrichtung (A) des Deflektors (22) verteilt sind.

13. Wischerblatt (8) nach einem der vorhergehenden Ansprüche, wobei der Gesamtquerschnitt der Projektionsöffnungen (30) zwischen 1 mm² und 3 mm² liegt.

## Claims

1. Wiper (8) of a wiper system (2) for a vehicle (1) comprising at least one wiper blade (24) carried by a support and configured to wipe a glazed surface (4) of a vehicle (1), the wiper blade (8) comprising a spoiler (22) configured to be connected to a cleaning system (12) distributing cleaning liquid, the spoiler (22) comprising a body (32) in which is formed a spray manifold (18) of the cleaning liquid configured to be connected to the cleaning system (12), the spray manifold (18) extending along a main longitudinal direction (A) of the spoiler (22) and comprising at least one row (48) of spray holes (30), **characterized in that** at least one of the spray holes (30) comprises a cleaning liquid passage section of between 0.002 mm² and 0.070 mm², and **in that** the spray holes (30) of a row (48) are spaced apart by a pitch of between 0.15 and 10 mm along the main longitudinal direction (A) of the spoiler (22).

2. Wiper (8) according to claim 1, wherein the at least one spray hole (30) comprises a cleaning liquid passage section of between 0.010 mm² and 0.070 mm², and wherein the spray holes (30) of a row (48) are spaced apart by a pitch of between 1 and 10 mm along the main longitudinal direction (A) of the spoiler (22).

3. Wiper (8) according to claim 1 or 2, wherein the at least one spray hole (30) comprises a cleaning liquid passage section of between 0.020 mm² and 0.070 mm², and the spray holes (30) of a row (48) are spaced apart by a pitch of between 1 and 5 mm along the main longitudinal direction (A) of the spoiler (22).

4. Wiper (8) according to any one of the preceding claims 1 to 3, wherein at least one spray hole (30) of the at least one row (48) of spray holes (30) has a substantially circular shape.

5. Wiper (8) according to any one of the preceding claims 1 to 3, wherein at least one spray hole (30) of the at least one row (48) of spray holes (30) has a substantially rectangular shape.

6. Wiper (8) according to any one of the preceding claims, wherein the spray manifold (18) comprises only one row (48) of spray holes (30) aligned along the main longitudinal direction (A) of the spoiler (22).

7. Wiper (8) according to any one of the preceding claims 1 to 5, wherein the spray manifold (18) comprises at least two distinct rows (48) of spray holes (30) aligned along the main longitudinal direction (A) of the spoiler (22).

8. Wiper (8) according to any one of the preceding claims, wherein the spray manifold (18) comprises a distribution tube (26) extending along a main longitudinal direction (A) of the spoiler (22) and a plurality of channels (28) distributed along the main longitudinal direction (A) of the spoiler (22), each of the channels (28) extending between the distribution tube (26) and the spray hole (30) of the plurality of spray holes (30).

9. Wiper (8) according to the preceding claim, wherein the plurality of channels (28) comprises at least two distinct alignments (46) of channels (28) aligned along a secant direction relative to the main longitudinal direction (A) of the spoiler (22).

10. Wiper (8) according to claim 8 or 9, wherein the spray manifold (18) comprises a plurality of rows (48) of channels (28) radially distributed around the distribution tube (26) over an angular sector of between 5° and 30°.

11. Wiper (8) according to any one of the preceding claims 8 to 10, wherein at least some channels (28) of the plurality of channels (28) are staggered across the body (32) of the spoiler (22).

12. Wiper (8) according to any one of the preceding claims, wherein the spray holes (30) of the at least one row (48) of spray holes (30) are distributed uniformly along the main longitudinal direction (A) of the spoiler (22).

13. Wiper (8) according to any one of the preceding claims, wherein the total section of the spray holes (30) is between 1 mm² and 3 mm².
